# EUROPÄISCHE PATENTANMELDUNG

(11) **EP 2 990 381 A1**
(43) Veröffentlichungstag der Anmeldung: **02.03.2016**
(21) Anmeldenummer: 14182806.1
(22) Anmeldetag: 29.08.2014
(51) Int. Cl.: C01G 19/02, C08F 36/04, C07F 7/22, C08F 4/48

(54) **Verfahren zur Herstellung von Zinnverbindungen**

(71) Anmelder: Covestro Deutschland AG, 51373 Leverkusen (DE)
(72) Erfinder: Richter, Frank, 51373 Leverkusen (DE); Jurkschat, Klaus, 44379 Dortmund (DE); Wagner, Michael, 44227 Dortmund (DE); Abeyawarathan, Vinusuya, 44379 Dortmund (DE); Gock, Michael, 44379 Dortmund (DE)
(74) Vertreter: Levpat

(57) **Zusammenfassung**

Ein Verfahren zur Herstellung von Zinnverbindungen umfasst den Schritt der Reaktion von Alkalistannaten der allgemeinen Formel A₂SnO₃ · 3 H₂O und/oder Erdalkalistannaten der allgemeinen Formel ESnO₃ · 3 H₂O, wobei A für ein Alkalimetall und E für ein Erdalkalimetall steht, mit einem Liganden. Als Ligand ist eine Verbindung eingesetzt wird, die aus der Gruppe: Triole, Triamine, Aminodialkohole, Diaminoalkohole oder deren Mischungen ausgewählt. Die Erfindung betrifft weiterhin Zinnverbindungen der allgemeinen Formel SnL₂ · M, wobei M für (A(OH))₂ und/oder E(OH)₂ steht mit A = Alkalimetall und E = Erdalkalimetall und L für ein Aminodialkoholat der allgemeinen Formel R¹N(XO)₂ steht, wobei R¹ für H, geradkettiges oder verzweigtes C₁-C₂₀-Alkyl, substituiertes oder unsubstituiertes C₆-C₃₀-Cycloalkyl bzw. substituiertes oder unsubstituiertes C₆-C₃₀-Aryl oder XOH steht und X für geradkettiges oder verzweigtes, zwischen N und O 2 oder 3 C-Atome aufweisendes Alkylen oder das N- mit dem O-Atom über ein C₂- oder C₃-Segment verknüpfendes C₆-C₃₀-Arylen steht. Ein weiterer Gegenstand der Erfindung ist die Verwendung von erfindungsgemäßen Zinnverbindungen zur Herstellung von Katalysatoren für die Polyurethanherstellung oder als Katalysatoren für die Polyurethanherstellung.

## Beschreibung

Die vorliegende Erfindung betrifft ein Verfahren zur Herstellung von Zinnverbindungen, umfassend den Schritt: der Reaktion von Alkalistannaten der allgemeinen Formel A₂SnO₃ ·3 H₂O und/oder Erdalkalistannaten der allgemeinen Formel ESnO₃ ·3 H₂O, wobei A für ein Alkalimetall und E für ein Erdalkalimetall steht, mit einem Liganden. Sie betrifft weiterhin Zinnverbindungen der allgemeinen Formel SnL₂ · M, wobei M für (A(OH))₂ und/oder E(OH)₂ steht mit A = Alkalimetall und E = Erdalkalimetall und L für ein Aminodialkoholat der allgemeinen Formel R¹N(XO)₂ steht, wobei R¹ für H, geradkettiges oder verzweigtes C₁C₂₀-Alkyl, substituiertes oder unsubstituiertes C₆-C₃₀-Cycloalkyl bzw. substituiertes oder unsubstituiertes C₆-C₃₀-Aryl oder XOH steht und X für geradkettiges oder verzweigtes, zwischen N und O 2 oder 3 C-Atome aufweisendes Alkylen oder das N- mit dem O-Atom über ein C₂- oder C₃-Segment verknüpfendes C₆-C₃₀-Arylen steht. Ein weiterer Gegenstand der Erfindung ist die Verwendung von erfindungsgemäßen Zinnverbindungen zur Herstellung von Katalysatoren für die Polyurethanherstellung oder als Katalysatoren für die Polyurethanherstellung.

Zinn(II)- und Zinn(IV)-Alkoxide finden vielfältige Anwendungen, z.B. in der Sol-Gel-Chemie zur Darstellung von gemischten Elementoxiden (M. Guglielmi, M. Carturan, J. Non-Cryst. Solids, 1988, 103, 16). Eine spezielle Klasse der Zinnalkoxide sind die entsprechenden Ethanolaminderivate der Typen Sn(OCR¹R²CR³R⁴NR⁵R⁶)ₙ (R¹, R², R³, R⁴, R⁵, R⁶ = H, Alkyl, Aryl; n = 2, 4); Sn[(OCR¹R²CR³R⁴)₂NR⁵_{]n} (R¹, R², R³, R⁴, R⁵ = H, Alkyl, Aryl; n = 2, 4) und R^{S}Sn[(OCR¹R²CR³R⁴)₃N (R¹, R², R³, R⁴ = H, Alkyl, Aryl; R⁵ = H, Alkyl, Aryl, Alkoholat, Thiolat, Carboxylat, Halogenid, OH). Diese Verbindungen bzw. ihre Derivate sind effiziente latente Katalysatoren für die Ring-Öffnungs-Polymerisation (ROP) von Lactid und verwandten Verbindungen und für die Polyurethanbildung (A. Kowalski, J. Libiszowski, A. Duda, S. Penczek, Macromolecules, 2000, 33, 1964; E. Amberger, M. R. Kula, Chem. Ber. 1963, 96, 2562).

Ein weiteres Beispiel für den Einsatz als Katalysatoren ist in WO 2011/051247 A1 gegeben.

Organische Zinnverbindungen, das sind Verbindungen mit mindestens einer Sn-C-Bindung, wie auch anorganische Zinnverbindungen, das sind Verbindungen, die durchaus auch organische Reste im Molekül tragen können, welche aber nicht über ein C-Atom an das Zinnatom gebunden sind, haben eine große praktische Bedeutung.

Ihre Herstellung erfolgte bisher auf chemisch umständliche und energetisch aufwändige Weise durch Überführung des natürlich vorkommenden, angereicherten Zinnerzes - meist Kassiterit (Zinnstein), SnO₂ - durch Reduktion - meist mit elementarem Kohlenstoff - in das Element und Abtrennung desselben in flüssiger Form (Schmelzpunkt ca. 232°C). Anschließend wird dieses in der Regel durch Umsetzung mit Salzsäure bzw. elementarem Chlor - letzteres ebenfalls meist in der Schmelze - zu Zinn-di- bzw. -tetrachlorid überführt, wobei letzteres Edukt für die überwiegende Zahl aller technisch hergestellten Zinnverbindungen ist.

WO 2011/113926, Chem. Eur. J. 2011, 17, 2361-2364 sowie EP 2 772 496 beschreiben auf elementarem Zinn basierende Verfahren zur Direktsynthese spezieller anorganischer Zinnverbindungen.

Die Dissertation "Cyclodextrin-Komplexe hochgeladener Metall-Kationen" von Johannes M. Ihringer, Fakultät für Chemie und Pharmazie der Ludwig-Maximilians-Universität München, 2006, offenbart unter anderem einen Tris-Chelatkomplex in wässriger Lösung durch Umsetzung von 1,2-Ethandiol mit Kaliumhexahydroxidostannat im Verhältnis 3:1. Die namensgebenden Cyclodextrin-Komplexe sind Gegenstand der Veröffentlichung von K. Benner, J. Ihringer, P. Klüfers und D. Marinov, Angew. Chem. Int. Ed. 2006, 45, 5818-5822. Für technische Anwendungen bei den hier beschriebenen Synthesen kann problematisch sein, dass sie in wässriger Lösung durchgeführt werden.

Die Möglichkeit der Herstellung von Tetraphenylzinn durch Umsetzung von SnO₂ mit Phenyllithium, allerdings in äußerst geringer Ausbeute (1,3%), wird in J. Organomet. Chem. 1968, 15, 247-250 (s. insbes. S. 248, Tabelle 1) beschrieben.

Aufgabe der vorliegenden Erfindung war es, ein universelles Verfahren zur Überführung natürlich vorkommender Zinnverbindungen bzw. einfach aus vorstehend genannten Zinnverbindungen generierbarer Verbindungen in technisch als Intermediate oder als Zielverbindungen wichtige, organische sowie anorganische Zinnverbindungen in technisch relevanten Ausbeuten zur Verfügung zu stellen, wobei die intermediäre Reduktion zum Element vermieden werden sollte.

Erfindungsgemäß gelöst wurde diese Aufgabe durch ein Verfahren zur Herstellung von Zinnverbindungen, umfassend den Schritt:
(A) Reaktion von Alkalistannaten der allgemeinen Formel (I) und/oder Erdalkalistannaten der allgemeinen Formel (II):

   A₂SnO₃ · 3 H₂O (I)

   ESnO₃ · 3 H₂O (II)

   wobei A für ein Alkalimetall und E für ein Erdalkalimetall steht,
   mit einem Liganden,

wobei als Ligand in Schritt (A) eine Verbindung eingesetzt wird, die aus der Gruppe: Triole, Triamine, Aminodialkohole, Diaminoalkohole oder deren Mischungen ausgewählt ist.

Die Ausgangsverbindungen gemäß (I) und (II) lassen sich auch äquivalent auch als A₂Sn(OH)₆ beziehungsweise ESn(OH)₆ beschreiben. Sie lassen sich in literaturbekannte Weise durch Reaktion der Alkali- oder Erdalkalihydroxide mit SnO₂ darstellen. Bevorzugt ist das Stannat K₂Sn(OH)₆.

Erfindungsgemäß ist der Einsatz eines Liganden vorgesehen, welcher mindestens zwei acide Protonen aufweist. Im Kontext der vorliegenden Erfindung sind unter "acide Protonen" solche H-Atome zu verstehen, welche als Teil von Hydroxygruppen, primären Aminogruppen oder sekundären Aminogruppen vorliegen.

Beispiele für Triole sind solche mit 3 bis 20 C-Atomen wie Umsetzungsprodukte von Trimethylolpropan mit Ethylenoxid und/ oder Propylenoxid, oder vorzugsweise Glyzerin und Trimethylolpropan selbst.

Zu Beispielen für Triamine gehören 1,8-Diamino-4-(aminomethyl)octan, 1,6,11-Undecantriamin, 1,7-Diamino-4-(3-aminopropyl)heptan, 1,6-Diamino-3-(aminomethyl)hexan oder 1,3,5-Tris-(aminomethyl)-cyclohexan.

Besonders geeignete Aminodialkohole (Dialkanolamine) schließen ein: Diethanolamin, bis(3- Propanol)amin, bis(2-Propanol)amin, bis(4-Butanol)amin, bis(3-Butanol)amin, bis(2-Butanol)amin und Mischungen derselben.

Beispiele Diaminoalkohole sind N-(2-Hydroxyethyl)-ethylendiamin, N-(2-Hydroxyethyl)- propan-1,3-diamin, N-(2-Hydroxyethyl)-butan-1,4- diamin, N-(2-Hydroxyethyl)-pentan-1,5-diamin, N-(2-Hydroxyethyl)-hexan-1,6-diamin, N-(2-Hydroxyethyl)- octan-1,8-diamin, N-(2-Hydroxyethyl)-decan-1,10-diamin und N-(2-Hydroxyethyl)-dodecan-1,12-diamin.

Aus den erfindungsgemäß erhaltenen Verbindungen können durch anschließende Umsetzung mit Säuren insbesondere Zinnalkoxide bzw. mit Alkylierungsreagenzien organische Zinnverbindungen erhalten werden. Elementares Zinn kommt in der Reaktionssequenz nicht vor.

Die erfindungsgemäße Umsetzung findet unter Wasserabspaltung statt, wobei es gleichgültig ist, wie das Wasser aus dem Reaktionsgemisch entfernt wird. Bevorzugt wird in höhersiedenden Lösungsmitteln oder im Vakuum bei Temperaturen gearbeitet, die eine hinreichend schnelle Wasserabspaltung gewährleisten.

Ausführungsformen und weitere Aspekte der vorliegenden Erfindung werden nachfolgend beschrieben. Sie können beliebig miteinander kombiniert werden, sofern sich aus dem Kontext nicht eindeutig das Gegenteil ergibt.

In einer Ausführungsform des erfindungsgemäßen Verfahrens umfasst dieses nach Schritt (A) den Schritt:
(B) Reaktion der nach Schritt (A) erhaltenen Zinnverbindung mit einer Säure oder
(C) Reaktion der nach Schritt (A) erhaltenen Zinnverbindung mit einer Organometallverbindung.

Als Säuren sind dabei insbesondere Verbindungen der Formel HY mit Y = F, Cl, Br, I, OS(0)R mit R = Alkyl, Aryl oder -OR2 mit R2 = H, Alkyl, Aryl sowie deren Addukte an schwache Basen, insbesondere NH₃ (Ammoniumhalogenide, Sulfate, Tosylate etc.) geeignet. Besonders bevorzugt ist Ammoniumchlorid. Wie bereits erwähnt werden hierdurch insbesondere die entsprechenden Zinnalkoxide erhalten.

Hinsichtlich der Organometallverbindungen sind insbesondere Lithiumalkyle und -aryle, Grignardverbindungen oder Aluminiumalkyle geeignet.

In einer weiteren Ausführungsform des erfindungsgemäßen Verfahrens werden in Schritt (A) die Alkalistannate der allgemeinen Formel (I) und/oder Erdalkalistannate der allgemeinen Formel (II) in einem nicht-wässrigen Suspensionsmittel suspendiert. Auf diese Weise kann die Reaktion wasserfrei geführt werden. In den Begriff "nicht-wässrig" ist der Umstand eingeschlossen, dass nicht eigens getrocknete Suspensionsmittel noch technisch unvermeidliche Spuren von Wasser enthalten. Geeignet sind insbesondere Kohlenwasserstoffe wie Aromaten, Alkylaromaten, Alkane und Cycloalkane. Es ist weiterhin möglich, dass der in Schritt (A) eingesetzte Ligand selbst das Suspensionsmittel darstellt. Dann muss kein vom Liganden verschiedenes Suspensionsmittel eingesetzt werden.

In einer weiteren Ausführungsform des erfindungsgemäßen Verfahrens ist der Ligand in Schritt (A) ein Aminodialkohol der allgemeinen Formel R¹N(XOH)₂, wobei
R¹ für H, geradkettiges oder verzweigtes C₁-C₂₀-Alkyl, substituiertes oder unsubstituiertes C₆-C₃₀-Cycloalkyl bzw. substituiertes oder unsubstituiertes C₆-C₃₀-Aryl oder XOH steht
   und
X für geradkettiges oder verzweigtes, zwischen N und O 2 oder 3 C-Atome aufweisendes Alkylen oder das N- mit dem O-Atom über ein C₂- ("ortho") oder C₅-("ortho-benzylisch") Segment verknüpfendes C₆-C₃₀-Arylen steht.

In einer weiteren Ausführungsform des erfindungsgemäßen Verfahrens ist der Ligand in Schritt (A) N-Methyl-diethanolamin, N-Methyl-diisopropanolamin und/oder N-n-Butyl-düsopropanolamin.

In einer weiteren Ausführungsform des erfindungsgemäßen Verfahrens wird die Reaktion in Schritt (A) mit einem Wasserabscheider und 2-Ethylhexanol, Toluol oder Cyclohexan als Schleppmittel durchgeführt.

Die Erfindung betrifft weiterhin Zinnverbindungen der allgemeinen Formel SnL₂ · M, wobei
M für (A(OH))₂ und/oder E(OH)₂ steht mit A = Alkalimetall und E = Erdalkalimetall
und
L für ein Aminodialkoholat der allgemeinen Formel R¹N(XO)₂ steht, wobei
R¹ für H, geradkettiges oder verzweigtes C₁C₂₀-Alkyl, substituiertes oder unsubstituiertes C₆-C₃₀-Cycloalkyl bzw. substituiertes oder unsubstituiertes C₆-C₃₀-Aryl oder XOH steht
und
X für geradkettiges oder verzweigtes, zwischen N und O 2 oder 3 C-Atome aufweisendes Alkylen oder das N- mit dem O-Atom über ein C₂- oder C₃-Segment verknüpfendes C₆-C₃₀-Arylen steht.

In einer Ausführungsform der erfindungsgemäßen Zinnverbindung steht L für zweifach deprotoniertes N-Methyl-diethanolamin, zweifach deprotoniertes N-Methyl-diisopropanolamin und/oder zweifach deprotoniertes N-n-Butyl-diisopropanolamin.

In einer weiteren Ausführungsform der erfindungsgemäßen Zinnverbindung steht M für (KOH)₂.

Ein weiterer Aspekt der vorliegenden Erfindung ist die Verwendung von Zinnverbindungen gemäß der vorliegenden Erfindung zur Herstellung von Katalysatoren für die Polyurethanherstellung oder als Katalysatoren für die Polyurethanherstellung.

### Beispiele:

Die vorliegende Erfindung wird anhand der nachfolgenden Beispiele näher beschrieben, ohne jedoch darauf beschränkt zu sein. Die nachfolgenden Beispiele und Vergleichsbeispiele sollen die Erfindung näher erläutern, ohne sie jedoch einzuschränken. Alle Mengenangaben beziehen sich, soweit nicht anders vermerkt, auf die Masse. Die Ermittlung des NCO-Gehaltes erfolgte durch Titration gemäß DIN 53 185.

Alle kommerziell zugänglichen Chemikalien mit Ausnahme der Polyisocyanate (Marken: Desmodur^{®}, Produkte der Bayer MaterialScience AG, D-51368 Leverkusen), wurden von der Fa. Aldrich, D-82018 Taufkirchen bezogen.

Alle verwendeten Lösungsmittel waren von HPLC-Qualität und wurden nicht weiter gereinigt oder getrocknet. Alle Reaktionen wurden unter einer Argon-Atmosphäre durchgeführt. Die NMRspektroskopischen Daten wurden mit den Spektrometern *Bruker DPX-300, DPX-500* und *Varian Mercury 200* ermittelt. Die chemischen Verschiebungen wurden auf die Signale von Tetramethylsilan (¹H) und Tetramethylstannan (¹¹⁹Sn) kalibriert. Alle Spektren wurden bei Zimmertemperatur aufgenommen. Die Elementaranalysen wurden mit dem Gerät *CHNS-932* der Firma *Leco* sowie dem *VarioMicroCube* der Firma *elementar* durchgeführt. Die Elektrospray-Massenspektren wurden mit dem Gerät *Thermoquest Finnigan Instrument* aufgenommen. Dabei diente Acetonitril, Dichlormethan oder Methanol (c = 0.1 mg/ml) als mobile Phase. Die ESIMS und die Elementaranalysen wurden nicht unter inerten Bedingungen durchgeführt.

### Beispiel 1: Darstellung von Sn[(OCH₂CH₂)₂NMe]₂

Dikaliumhexahydroxidostannat K₂Sn(OH)₆ (2,11 g, 7,1 mmol) und MeN(CH₂CH₂OH)₂ (1,8 g, 15,1 mmol) wurden unter Schutzgasatmosphäre mit Toluol (100 ml) bis zur Beendigung der Wasserabscheidung am Wasserabscheider erhitzt. Anschließend wurde die Reaktionslösung filtriert und der zurückbleibende Feststoff **Z** (3,23 g, 98% d. Th.) im Vakuum getrocknet. Die Auswertung kombinierter analytischer Methoden (NMR, Elementaranalyse, ESIMS) belegte, dass es sich bei dem erhaltenen Feststoff **Z** um K₂Sn(OH)₂[(OCH₂CH₂)₂NMe]₂ handelt, aus dem durch Zugabe von zwei Äquivalenten Ammoniumchlorid (NH₄Cl) und Abfiltrieren des ausgeschiedenen Kaliumchlorids Sn[(OCH₂CH₂)₂NMe]₂ erhalten wurde.

Wurde die analoge Reaktion in 2-Ethylhexanol anstatt Toluol durchgeführt, wurden neben dem o.g. Spirocyclus Sn[(OCH₂CH₂)₂NMe]₂ und dem entsprechenden Dikaliumstannat K₂Sn(OH)₂[(OCH₂CH₂)₂NMe]₂ auch Verbindungen mit 2-Ethylhexyl-O-substitution am Zinn gefunden, was belegt, dass auch der nicht-funktionelle Alkohol 2-Ethylhexanol mit Dikaliumhexahydroxidostannat in Reaktion trat.

### Beispiel 2: Verwendung von K₂Sn(OH)₂[(OCH₂CH₂)₂NMe]₂ gemäß Beispiel 1 erhalten

Der Feststoff **Z** aus Beispiel 1 eignet sich als thermolatenter Katalysator für die Polyurethandarstellung.

30 mg **Z** wurden in n-Butylacetat (7 g) gelöst und das Hexamethylendiisocyanat-Trimer Desmodur N 3300 (63 g) hinzugegeben. Nach Erreichen von 30 °C wurde Triethylenglycolmonomethylether (53,61 g) auf einmal dazugegeben. In dieser Reaktionsmischung betrug der Isocyanatgehalt 11% und dieser wurde über die Zeit zunächst bei 30 °C und nach 120 min (NCO-Gehalt 10,8 Gew.-%) bei 50 °C mittels NCO-Titration verfolgt. Nach 22,7 h betrug der Isocyanatgehalt 0,9 Gew.-%. Der NCO-Gehalt einer analog gefahrenen Blindprobe ohne Katalysator betrug nach dieser Zeit 5,4 Gew.-%.

### Beispiel 3: Darstellung von Sn{[OCH(CH₃)CH₂]₂NMe}₂

Eine Suspension bestehend aus Dikaliumhexahydroxidostannat K₂Sn(OH)₆ (2,18 g, 7,3 mmol) und MeN(CH₂CH(CH₃)OH)₂ (2,25 g, 15,3 mmol) in Toluol (100 ml) wurde unter Schutzgasatmosphäre 24 h am Wasserabscheider erhitzt. Nach Beendigung der Wasserabscheidung wurde die Reaktionslösung filtriert und der zurückbleibende Feststoff (1,88 g, 49 % d. Th.) im Vakuum getrocknet. Die Auswertung kombinierter analytischer Methoden (NMR, Elementaranalyse, ESIMS) belegte, dass es sich um K₂Sn(OH)₂{[OCH(CH₃)CH₂]₂NCH₃}₂ handelt.

### Beispiel 4: Darstellung von Sn[(OCH₂CH₂)₂Nn-Bu]₂

Dikaliumhexahydroxidostannat, K₂Sn(OH)₆ (4,3 g, 14,1 mmol) und n-BuN(CH₂CH₂OH)₂ (4,7 g, 29,1 mmol) wurden unter Schutzgasatmosphäre mit Toluol (100 ml) bis zur Beendigung der Wasserabscheidung am Wasserabscheider erhitzt. Anschließend wurde die Reaktionslösung filtriert und der zurückbleibende Feststoff (5,8 g, 74,9 % d. Th.) im Vakuum getrocknet. Die Auswertung kombinierter analytischer Methoden (NMR, Elementaranalyse, ESIMS) belegte, dass es sich um K₂Sn(OH)₂[(OCH₂CH₂)₂Nn-Bu]₂ handelt, aus dem durch Zugabe von 2 Äquivalenten NH₄Cl und Abfiltrieren des ausgeschiedenen Kaliumchlorids Sn[(OCH₂CH₂)₂Nn-Bu]₂ erhalten wurde.

Eine weitere Fraktion etwas geringerer Reinheit (1,6 g, 20,7 % d. Th.) wurde nach Einengen des Filtrates und mehrtägiger Aufbewahrung im Kühlschrank (ca. 4°C) erhalten.

### Beispiel 5: Darstellung von Sn{[OCH(CH₃)CH₂]₂Nn-Bu}₂

Eine Suspension, bestehend aus Dikaliumhexahydroxidostannat K₂Sn(OH)₆ (2,18 g, 7,3 mmol) und n-BuN(CH₂CH(CH₃)OH)₂ (2,90 g, 15,3 mmol) in Toluol (100 ml) wurde unter Schutzgasatmosphäre 24 h am Wasserabscheider erhitzt. Nach Beendigung der Wasserabscheidung wurde die Reaktionslösung filtriert und der zurückbleibende Feststoff (2.15 g, 49 % d.Th.) im Vakuum getrocknet. Eine weitere Fraktion ähnlicher Reinheit (1,9 g, 43 % d. Th.) wurde nach Einengen des Filtrates und mehrtägiger Aufbewahrung im Kühlschrank (ca. 4°C) erhalten. Die Auswertung kombinierter analytischer Methoden (NMR, Elementaranalyse, ESIMS) belegte, dass es sich um K₂Sn(OH)₂{[OCH(CH₃)CH₂]₂N*n*-Bu}₂ handelt aus dem durch Zugabe von 2 Äquivalenten NH₄Cl und dem Abfiltrieren des ausgeschiedenen Kaliumchlorids Sn{[OCH(CH₃)CH₂]₂Nn-Bu}₂ erhalten wurde.

### Beispiel 6: Herstellung einer Tetraorganozinnverbindung aus dem rohen gemäß Bsp. 1 erhaltenen Reaktionsgemisch

Zu einer auf -78 °C gekühlten Suspension von 74 mg des Feststoffes Z aus Bsp. 1 in THF (5 ml) wurde n-BuLi (0,5 ml, 0,013 mmol) getropft. Nach langsamem Auftauen auf Zimmertemperatur wurden die flüchtigen Bestandteile im Vakuum entfernt, der Rückstand in C₆D₆ suspendiert, filtriert, NMR-spektroskopisch charakterisiert und anschließend zur Ausbeutebestimmung eingedampft: 53 mg (96% d. Th.) eines leicht gelben Öls mit charakteristischem Geruch.
**¹¹⁹Sn{¹H} NMR** (111.92 Hz, C₆D₆): δ (ppm) = -13 (s). Diese Verschiebung entspricht der aus der Literatur für Sn(n-Bu)₄ bekannten.

### Beispiel 7: Vergleichsversuch gemäß J. Organomet. Chem. 1968, 15, 247-250: Reaktion von SnO₂ mit n-BuLi

Die Reaktion von SnO₂ mit *n*-BuLi (4 eq., 2.5 M in Hexan) ohne weiteres Lösungsmittel bei -78 °C zeigte nach Auftauen auf Zimmertemperatur im ¹¹⁹Sn{¹H}NMR Spektrum ein intensitätsarmes Signal für Sn(*n*-Bu)₄. Die in J. Organomet. Chem. 1968, 15, 247-250 bzgl. Tetraphenylzinn getroffene Aussage zur niedrigen Ausbeute wurde bestätigt. Es wurde die Bildung größerer Mengen elementaren Zinns beobachtet.

## Patentansprüche

1. Verfahren zur Herstellung von Zinnverbindungen, umfassend den Schritt:
(A) Reaktion von Alkalistannaten der allgemeinen Formel (I) und/oder Erdalkalistannaten der allgemeinen Formel (II):
A₂SnO₃ · 3 H₂O (I)
ESnO₃ · 3 H₂O (II)
wobei A für ein Alkalimetall und E für ein Erdalkalimetall steht,
mit einem Liganden,
**dadurch gekennzeichnet, dass** als Ligand in Schritt (A) eine Verbindung eingesetzt wird, die aus der Gruppe: Triole, Triamine, Aminodialkohole, Diaminoalkohole oder deren Mischungen ausgewählt ist.

2. Verfahren gemäß Anspruch 1, weiterhin umfassend nach Schritt (A) den Schritt:
(B) Reaktion der nach Schritt (A) erhaltenen Zinnverbindung mit einer Säure
oder
(C) Reaktion der nach Schritt (A) erhaltenen Zinnverbindung mit einer Organometallverbindung.

3. Verfahren gemäß Anspruch 1 oder 2, wobei in Schritt (A) die Alkalistannate der allgemeinen Formel (I) und/oder Erdalkalistannate der allgemeinen Formel (II) in einem nicht-wässrigen Suspensionsmittel suspendiert werden.

4. Verfahren gemäß einem der Ansprüche 1 bis 3, wobei der Ligand in Schritt (A) ein Aminodialkohol der allgemeinen Formel R¹N(XOH)₂ ist, wobei
R¹ für H, geradkettiges oder verzweigtes C₁C₂₀-Alkyl, substituiertes oder unsubstituiertes C₆-C₃₀-Cycloalkyl bzw. substituiertes oder unsubstituiertes C₆-C₃₀-Aryl oder XOH steht
und
X für geradkettiges oder verzweigtes, zwischen N und O 2 oder 3 C-Atome aufweisendes Alkylen oder das N- mit dem O-Atom über ein C₂- oder C₃-Segment verknüpfendes C₆-C₃₀-Arylen steht.

5. Verfahren gemäß Anspruch 4, wobei der Ligand in Schritt (A) N-Methyl-diethanolamin, N-Methyl-diisopropanolamin und/oder N-*n*-Butyl-diisopropanolamin ist.

6. Verfahren gemäß einem der Ansprüche 1 bis 5, wobei die Reaktion in Schritt (A) mit einem Wasserabscheider und 2-Ethylhexanol, Toluol oder Cyclohexan als Schleppmittel durchgeführt wird.

7. Zinnverbindungen der allgemeinen Formel SnL₂ ·M, wobei
M für (A(OH))₂ und/oder E(OH)₂ steht mit A = Alkalimetall und E = Erdalkalimetall
und
L für ein Aminodialkoholat der allgemeinen Formel R¹N(XO)₂ steht, wobei
R¹ für H, geradkettiges oder verzweigtes C₁C₂₀-Alkyl, substituiertes oder unsubstituiertes C₆-C₃₀-Cycloalkyl bzw. substituiertes oder unsubstituiertes C₆-C₃₀-Aryl oder XOH steht
und
X für geradkettiges oder verzweigtes, zwischen N und O 2 oder 3 C-Atome aufweisendes Alkylen oder das N- mit dem O-Atom über ein C₂- oder C₃-Segment verknüpfendes C₆-C₃₀-Arylen steht.

8. Zinnverbindung gemäß Anspruch 7, wobei L für zweifach deprotoniertes N-Methyl-diethanolamin, zweifach deprotoniertes N-Methyl-diisopropanolamin und/oder zweifach deprotoniertes N-n-Butyl-diisopropanolamin steht.

9. Zinnverbindung gemäß Anspruch 7 oder 8, wobei M für (KOH)₂ steht.

10. Verwendung von Zinnverbindungen gemäß einem der Ansprüche 7 bis 9 zur Herstellung von Katalysatoren für die Polyurethanherstellung oder als Katalysatoren für die Polyurethanherstellung.
